# EUROPEAN PATENT SPECIFICATION

(11) **EP 3 171 250 B1**
(45) Date of publication and mention of the grant of the patent: **26.12.2018**
(21) Application number: 15472003.1
(22) Date of filing: 19.11.2015
(51) Int. Cl.: G06F 3/02, B41J 5/10

(54) **BUTTON FOR KEYBOARD AND KEYBOARD**
KNOPF FÜR TASTATUR UND TASTATUR
BOUTON POUR CLAVIER ET CLAVIER

(43) Date of publication of application: 24.05.2017
(73) Proprietor: CPD Ltd., 1113 Sofia (BG)
(72) Inventor: Toromanov, Slavcho Hristov, 2077 Koprivshtitsa (BG)
(74) Representative: Benatov, Samuil Gabriel

(56) References cited:
- US-A- 3 648 394
- US-A- 4 100 402
- US-A1- 2007 165 368

## Description

### TECHNICAL FIELD OF THE INVENTION

The invention relates to a button and a keyboard with such button, which are used in electronic equipment for data entry, requiring keyboards.

### BACKGROUND OF THE INVENTION

In the currently existing devices for data entry the buttons are usually permanently inscribed or marked with the appropriate character or function of the button. In many cases where the devices for data entry are used is necessary to change the inscription of the button. In the art this has been achieved in different ways. Widespread, for example, is by adding an additional inscription on contact-working surface of the button when it needs to make use of the second alphabet or a new function of the button.

Another known embodiment is the replacement of the entire body of a button with a different inscription which can lead to mechanical damage in the construction of the button itself or the buttons around it. Furthermore, replacement of the entire body of the button is expensive, especially when it is needed to be replaced large number or all of the buttons on the keyboard, and when necessary replacement of buttons in many keyboards.

Another popular variation is to put caps over the body of the button marked with another inscription. Such caps are known for example from patents US 5,183,346 and US 4,755,072. These caps are pulled onto the body of the button and change its geometry, which can hinder the user when entering data. Moreover, it is more likely that these caps to be detached from the body of the button and fall off during transport or use of the keyboard.

A key for a keyboard is known from US 4100402 A comprising: a main body portion adapted to be contacted by the operator, the end of the body portion remote from the operator formed with a rear wall defining a recess into which the nail of the operator can extend and terminating in a shelf, an indicia holding plate mountable on said shelf having a pocket for accepting and holding a label with indicia thereon and an opening into said pocket to permit the label to be exchanged, the top of said plate being transparent to permit the indicia to be viewed, and mating means on said plate and said shelf for mounting the plate to the shelf. The changing of the label with indicia of this key is complicated and also the lowered position of the label toward the contact-working surface of the key hinders visibility of the label, as the label would be hidden from the user behind the key in several viewing angles.

A button is known from US 3648394 comprising: a transparent cap member having resilient latch elements extending therefrom and being two oppositely disposed pairs of diverging spring fingers, a removable key identification marker and a base member securable to a keyboard keystem and having a pair of oppositely disposed recesses defined in part by oppositely disposed diverging surfaces constituting keepers, said spring fingers being removably insertable into said apertured recesses and being squeezably displaced by said keepers for releasable retainment therebetween. The construction of this button is complicated so it require complicated separate production of its elements and makes more difficult its assembling, that increases the manufacturing costs.

### SUMMARY OF THE INVENTION

Task of the invention is to provide a button for a keyboard that allows in case of need quick, easy and inexpensive change the inscription on the button, which does not change the geometry of the button and does not compromising its construction.

Another task of the invention is to provide a button for a keyboard, which interchangeable element together with the inscription on the button is securely attached to the button in order to prevent unintentional detaching of the interchangeable element and fall off during operation or transport of the keyboard.

Another object of the invention is to provide a keyboard with the above buttons.

The present invention is set out in the appended set of claims.

The advantage of the button for keyboard according to the invention is that if necessary it is ensured quick, easy, and inexpensive replacement of the inscription on the button by replacing the detachable cap of the button. The construction of the detachable cap provides a tight assembly with the body of the button, which prevents unintentional falling off of the detachable cap. While the size of the detachable cap is adapted to the size of the button, so it does not substantially change its geometry.

### BRIEF DESCRIPTIION OF THE DRAWINGS

In more detail, the button for keyboard, the base for buttons and the keyboard according to the invention are illustrated by means of preferred embodiments, given as non-limiting examples of scope of the invention, with reference to the accompanying drawings, wherein:
Figure 1 is a cross-sectional view of a button with the detachable cap according to one embodiment of the invention.
Figure 2 is a perspective view from below of the detachable cap with two symmetrically arranged coupling elements.
Figure 3 is a perspective view from below of the detachable cap for bigger in size button with six symmetrically arranged coupling elements. Four of the coupling elements are provided with engaging elements. Below are shown the reinforcing vertical ribs, which are joining two pairs of coupling elements.
Figure 4 is a view from above of a base for buttons with a plurality of small buttons and one bigger button. The buttons are shown without caps, which allows the coupling openings of the detachable caps to be visible. The dotted lines show the vertical plane of symmetry of the buttons, according to which are symmetrically positioned coupling openings.
Figure 5 is a cross-section through the long side of the button according to another embodiment. The detachable cap has two coupling elements joined with a vertical rib. The coupling elements are oblong and are inserted in through openings. In the upper part of the body of the button is provided a craddle that grips sideways the head of the cap.
Figure 6 is a cross-section through a short side of the button depicted in Fig. 5. The coupling element of the cap is oblong and is inserted into the through opening.
Figure 7 shows the button from Figures 5 and 6 in perspective with detached cap. In the upper part of the body of the button is provided a craddle for the head of the cap and groove for vertical reinforcing rib.
Figure 8 is a cross-sectional view of a button according to another embodiment, with a cap which has a peripheral edge that grips completely the upper part of the body of the button.
Figure 9.1 is an exploded perspective view of the base for buttons according to one embodiment of the invention with dismounted caps. The buttons have craddle for the cap's head.
Figure 9.2 is a perspective view of the assmbled base of the buttons shown in fig. 9.1.
Figure 10.1 is an exploded perspective view of the base for buttons according to another embodiment of the invention with dismounted caps. The detachable caps have a peripheral edge in order to grip the upper part of the body of the button.
Figure 10.2 is a perspective view of assembled base for buttons shown in Fig. 10.1.

### EMBODIMENTS OF THE INVENTION

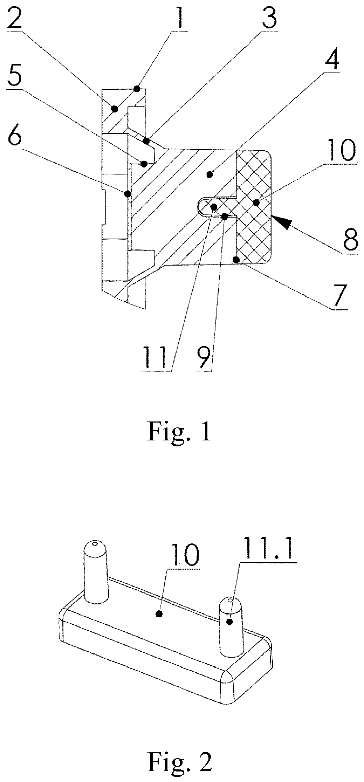

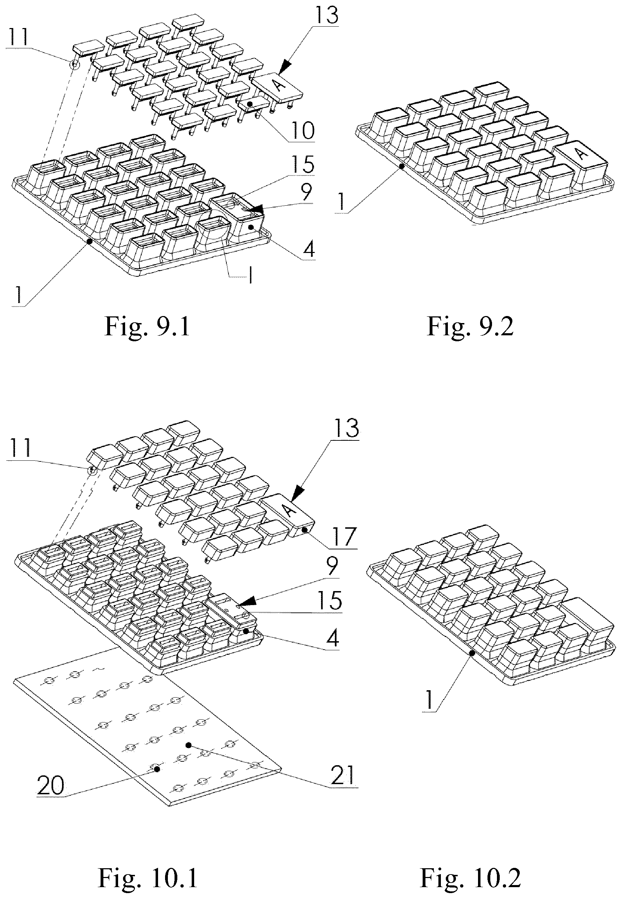

A button for keyboard according to the invention (fig. 1) includes: a body of the button 4, a contact element 5 with a contact layer 6, which contact element is positioned on the underside of the body of the button 4, an elastic spring element 3, which provides the necessary working stroke of the button and which allows it to return into starting position, and a detachable cap 8 which is detachably attached to the upper surface 7 of the body of the button 4, wherein on the upper surface of the detachable cap forming the contact-working surface of the button is positioned an inscription 13 indicating the button's function (see. fig. 9 and 10). According to the invention the detachable cap 8 has a head 10 and at least one coupling element 11, which projects from the lower side of the head 10, said at least one coupling element 11 is inserted into a corresponding in shape and position at least one coupling opening 9 provided in the body of the button 4.

The body of the button 4 can be of different shapes in cross section - a square, rectangular or other polygonal shape, circular or elliptical. In the preferred embodiment shown on the figures the shape of the cross section of the button is generally rectangular.

The body of the button 4 and the detachable cap 8 can be made of the same or different suitable materials, such as elastic materials, for example: TPE (thermoplastic elastomer), silicone rubber, rubber-type rubber and the like, or rigid materials, such as: ABS (acrylonitrile-butadiene-styrene), polycarbonate, polypropylene, polyethylene and the like. Preferably the body of the button 4 is made of elastic material.

In one embodiment of the invention, the detachable cap 8 is made of light conductive material, and in this embodiment the keyboard is provided with light sources and light pipes, which are conducting the light from the light source to the coupling elements 11 of the light conductive cap 8. The light conductance through the coupling elements 11 allows the illumination of the cap's head 10 and highlighting the inscription 13 on the detachable cap 8 at reduced or absence of external light.

The spring element 3 is made of an elastic material, for example: TPE (thermoplastic elastomer), silicone rubber, rubber-type rubber and the like.

In the preferred embodiments shown in the drawings, the body of the button 4 and the elastic spring element 3 are formed as one piece of the same elastic material. In this embodiment, the elastic spring element 3 is designed as a flexible membrane in the shape of a truncated pyramid extending downwards from the lower surface of the button. The elastic membrane allows the button to perform reciprocating motion in vertical direction and after removing the force on the button the elastic membrane returns the body to its upper starting position.

It is possible that the spring element is in the form of a cone, double cone, bell, dome, flat dome and others.

In the embodiments shown on the figures the contact element 5 is budlike projection with flat lower surface, which projects from the underside of the body of the button and is monolithic thereto. A contact layer 6 of suitable electrically conductive material, such as carbon black, is applied by a known manner to the lower surface of the contact element 5.

The contact layer 6 may be made of conductive carbon rubber, which joins the contact element 5 through vulcanization.

In preferred embodiments of the invention shown in the figures, the lateral dimensions of the detachable cap 8 correspond to the lateral dimensions of the body of the button 4, wherein the joining of the detachable cap 8 does not change the side geometry of the button.

As shown in figures 1 and 2, the detachable cap 8 has a head 10, and the attachment of the detachable cap 8 to the body of the button 4 is done by coupling elements 11 that projects from the lower surface of the cap's head 10. The coupling elements 11 are inserted into corresponding by shape and dimensions coupling openings 9 in the upper surface of the body of the button 4. For example, as shown on the figures, the coupling elements 11 can be designed as cylindrical extensions inserted into the respective cylindrical openings 9 in the body of button 4. The shape of the coupling elements in cross-section may be different, for example, truncated cone, truncated pyramid, square or other polygonal prism. Accordingly, the coupling openings may have a different shape corresponding to the shape of coupling elements.

In a preferred embodiment of the invention the coupling elements 11 are arranged with their long side perpendicular to the head of the cap 10 and, respectively, the openings 9 are arranged with their long side perpendicularly to the upper surface of the body of the button 4. It is also possible that the coupling elements 11 are arranged under a certain angle with respect to the head of the cap 10 and, respectively, the longitudinal axes of the openings 9 are arranged at the same angle relative to the upper surface of the body of the button 4.

The upper surface of the detachable cap may be horizontal, concave, convex, tilted to one side or another form that allows convenient button click.

Different embodiments of the detachable cap are possible according to the material that is made of. The material of the detachable cap could be rigid or elastic. Examples of the types of rigid and elastic materials are mentioned above.

The engaging of the coupling elements to the body of the button may also be implemented in several different ways.

In one embodiment the coupling elements of the detachable cap are designed with cross-sectional dimensions substantially identical to the inside dimension of the coupling openings in the body of the button. This allows when the coupling elements are inserted into the openings of the button's body to ensure cohesion due to frictional forces. Thus the detachable cap cannot be easily detached from the body of the button without corresponding mechanical force is applied. Depending on the material of which the detachable cap and the body of the button are made, the coupling elements size and their respective openings size must be made accordingly.

In another embodiment the coupling elements are made with smaller lateral dimensions from the openings, and the engagement can be carried out with additional engaging elements, which are provided on the coupling element and in the coupling openings, as more fully described below.

The detachable cap 8 may have one or more coupling elements 11 depending on the dimensions of the body of the button 4, which is provided with a corresponding number of openings 9 for reception of the coupling elements 11.

In a preferred embodiment the detachable cap 8 has an even number of coupling elements 11, symmetrically arranged with respect to at least one plane of symmetry of the detachable cap. Accordingly, in the body of the button 4 are provided a an even number of openings 9 which are also arranged symmetrically with respect to at least one plane of symmetry of the body of the button.

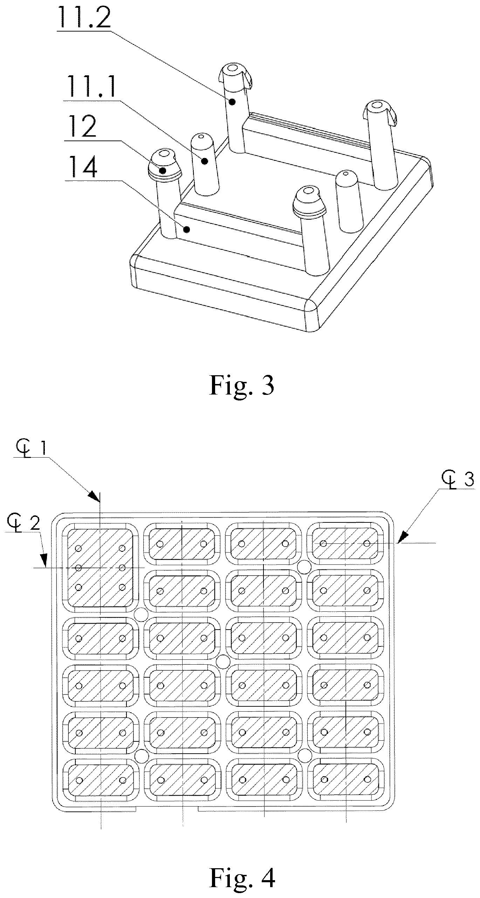

For example, as shown in fig. 2, the detachable cap has two coupling elements 11, which are arranged symmetrically with respect to a vertical plane of symmetry perpendicular to the long side of the detachable cap 8. Accordingly, in the body of the button 4 are provided two openings 9 arranged symmetrically with respect to the vertical plane of symmetry perpendicular to the long side the body of the button 4 (Fig. 4).

In Figure 3 is shown as well an example of a cap 8 for bigger in size button (see Fig. 4) with six coupling elements 11 which are arranged symmetrically with respect to two vertical, perpendicular to each other planes of symmetry. In the body of the button 4 are provided corresponding number of openings 9 also arranged symmetrically to two vertical, perpendicular to each other planes of symmetry (Fig. 4).

Different configurations of the coupling elements 11 are possible depending on the size and shape of the button and the detachable cap.

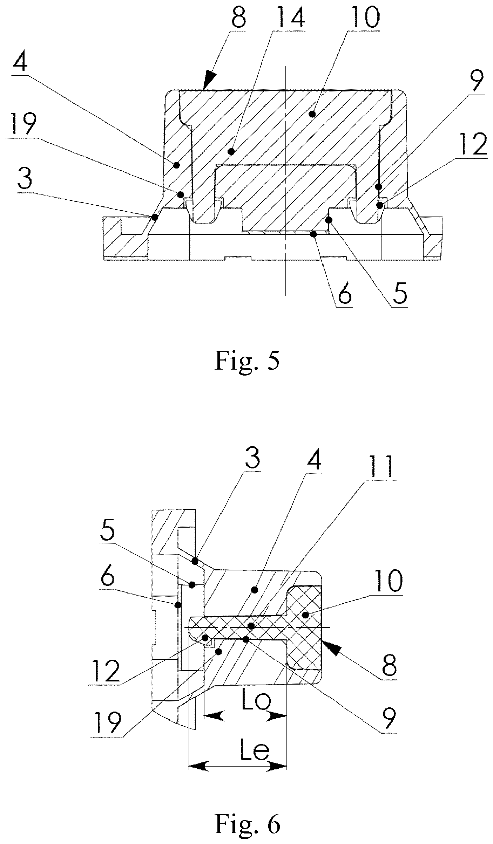

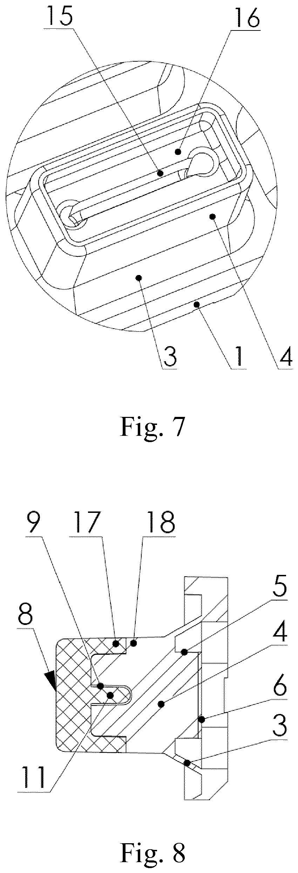

For reinforcement of the detachable cap 8 in a further preferred embodiment, shown in Figures 3 and 5 is provided a vertical rib 14, which joins the two symmetrically arranged coupling elements 11. In order to insert the reinforcing vertical ribs 14 in the body of the button 4 is provided a corresponding in shape and position groove 15 (Fig. 7).

Figure 3 shows the detachable cap 8 with three pairs of coupling elements 11, and between the two pairs of coupling elements 11 are arranged, respectively, two vertical reinforcing ribs 14.

Different number of reinforcing vertical ribs 14 is possible with different configuration depending on the number and arrangement of coupling elements 11.

In a preferred embodiment shown in Figures 5 and 6 part of the openings 9 are through holes and pass vertically through the entire body of the button 4. In this embodiment, the respective part of the coupling elements 11.2 are prolonged (Fig. 3) so as to reach to the lower side of the body of the button or to protrude out from the underside of the button. For this purpose the length Lₑ of the oblonged coupling element 11.2 is equal to or greater than the length Lₒ of its corresponding through opening 9. It is possible that all the coupling elements are oblonged.

In a preferred modification of this embodiment shown in Figures 3, 5 and 6 at the lower end of the oblonged coupling element 11.2 there is at least one engaging element 12 which engages with the corresponding support element 19 provided in the body of the button 4 at the lower end of the corresponding opening 9. The engaging elements may be of different shape. For example, the engaging element 12 may be an annular, semi-spherical or spherical fillet at the end of the oblong coupling element 11.2. Accordingly, the support element 19 can be formed as an annular step or trumpet at the lower end of the through hole opening 9 (see Fig. 5). Also the engaging and the support elements may be designed respectively as a hook and notch. The configuration of the engaging element and the support element are dependent on the material from which are made the detachable cap and the body of the button.

In a preferred embodiment, shown in Figures 5, 6, 7, 9.1 and 9.2, on the upper surface of the body of the button 4 is provided cradle 16 that grips the side of the head of the cap 10. Accordingly, the lateral dimensions and the shape of the cross section of the head of the cap 10 are provided to correspond to the shape and dimensions of the said cradle 16. In this embodiment, the advantage is that during transportation and use the cap cannot be detached undesired and unexpected.

In another embodiment shown in Figures 8, 10.1 and 10.2, the detachable cap 8 has a peripheral edge 17 projecting peripherally downwardly from the lower surface of the head of the cap 10, and in the upper part of the body of the button 4 is provided a stepped recess 18 for receiving the said peripheral edge 17 of the detachable cap 8. In this embodiment, the detachable cap 8 covers the upper part of the body of the button 4, which also contributes to a more secure grip on the detachable cap 8 and prevents undesirable disassembly of the button. In the embodiment shown in Figures 8, 10.1 and 10.2, the size and shape of the lateral periphery of the head of the cap 10 corresponds to the dimensions and the shape of the side periphery of the body of the button 4. In this way, attaching of the detachable cap 8 does not change the side geometry of the button. There is a possible embodiment (not shown) in which the lateral dimensions of the head of the cap 10 is greater than the lateral dimensions of the body of the button 4, in which the head of the cap 10 projects laterally beyond the periphery of the body of the button 4.

According to the invention the base for buttons 1 includes buttons with the above construction which are attached to a main element 2 (figures 1, 4, 9 and 10). The main element can be made of rigid and/or flexible material. Examples of the types of materials were specified above.

The body of the button 4 is joined to the main element 2 by means of an elastic spring element 3 (Figures 1, 5, 6, 7, 8). The spring element may be for example membrane, which is an elastic loop with a certain height, thickness and width, extending from the base for buttons at a certain angle and joining the lower body of a button. Joining the spring element 3 to the main element 2 can be mechanically or chemically defined process - for example vulcanization.

In a preferred embodiment the main element 2, the body of the button 4 and the elastic spring element 3 are made of the same elastic material as a monolithic body, as shown on the figures.

The buttons from the base for buttons are arranged in a particular configuration in accordance with their function.

According to the invention a keyboard for an electronic device comprises of buttons with the above-described construction, arranged in a specific configuration on the said base for buttons 1, and contact electrodes 20 positioned in the same configuration as the buttons on a carrier of the contact electrodes 21, and housing (Figure 10.1). The contact electrode serves to close the electrical circuit with its corresponding contact element of the button on the keyboard. The carrier of the contact electrode can be, for example, a printed circuit board (PCB - printed circuit board) made of glass fiber. It is possible to be applied additional layer of conductive material on the contact electrode, the same as the one on the contact element from the keyboard, for example, carbon black.

The housing of the keyboard can be independent or part of the housing of an electronic device, which the keyboard is designed for. For example, the keyboard can be a part of a cash register.

## Claims

1. A button for keyboard, incudes:
- a body of the button (4),
- a contact element (5) with a contact layer (6), said contact element being positioned on underside of the body of the button (4),
- a spring element (3) made of elastic material providing necessary working stroke of the button and its returning to a starting position,
- a detachable cap (8) which is detachably attached to a upper surface (7) of the body of the button (4), wherein on a upper surface of the detachable cap, wich forms a contact-working surface of the button, is located an inscription (13) indicating a function of the button,
wherein the detachable cap (8) has a head (10) and at least one coupling element (11) projecting from lower side of the detachable cap (8), and for attachment of said detachable cap (8) to said body of the button (4) said at least one coupling element (11) is inserted in a corresponding in shape and position at least one coupling opening (9) provided in the body of the button (4), and in that the body of the button (4) and the spring element (3) are formed as one piece of same elastic material.

2. Button for keyboard according to claim 1, **characterized in that** the detachable cap (8) is made of elastic material or ridgid material.

3. Button for keyboard according to any one of the preceding claims, **characterized in that** the detachable cap (8) has an even number of coupling elements (11) arranged symmetrically with respect to at least one plane of symmetry of the detachable cap, said coupling elements (11) being inserted into their corresponding in shape and location coupling openings (9) in the body of the button (4).

4. Button for keyboard according to Claim 3, **characterized in that** the detachable cap (8) has between at least one pair of symmetrically arranged coupling elements have a vertical reinforcing rib (14) and the body of the button (4) is provided with a corresponding in shape and position groove (15) for receiving said reinforcing rib (14).

5. Button for keyboard according to any one of the preceding claims, **characterized in that** at least one of the openings (9) in the body of the button (4) is a through hole, passing from the top surface to the bottom surface of the body of the button (4), and its corresponding oblong coupling element (11.2) has at least one engaging element (12) at its lower end, for engagement with a respective support element (19) provided in the body of the button (4) at the lower end of the corresponding through opening (9).

6. Button for keyboard according to claim 5, **characterized in that** a length Lₑ of the said oblong coupling element (11) of the detachable cap is greater than a length Lₒ of the said through opening (9) so that the lower end of the coupling element (11) projects from the underside of the body of the button (4).

7. Button for keyboard according to any one of the preceding claims, **characterized in that** on the upper surface of the body of the button (4) is provided a craddle (16) that grips the head of the cap (10) which is formed with side dimensions and shape corresponding to the said craddle (16).

8. Button for keyboard according to any one of claims 1 to 6, **characterized in that** the detachable cap (8) has a peripheral edge (17) projecting peripherally downwardly from the lower surface of the head of the cap (10), and in the upper part of the body of the button (4) is provided a stepped peripheral recess (18) with corresponding shape and size for receiving said peripheral edge (17) of the detachable cap (8).

9. Base for buttons, which includes buttons according to any of the claims 1 to 8 attached to a flat main element (2), wherein said buttons are arranged on the flat main element (2) in a predetermined order and are joined thereto by means of elastic spring elements (3).

10. Base for buttons according to claim 9, **characterized in that** the flat main element (2), the bodies of the buttons (4) and the elastic spring elements (3) are made of the same elastic material as a monolithic body.

11. Keyboard for an electronic device including the base for buttons (1) according to claim 9 or 10.

## Patentansprüche

1. Eine Taste für eine Tastatur enthaltend:
- ein Körper der Taste (4),
- ein Kontaktelement (5) mit einer Kontaktschicht (6), wobei das Kontaktelement an der Unterseite des Körpers der Taste (4) positioniert ist,
- ein Federelement (3) aus elastischem Material, das den erforderlichen Arbeitshub der Taste gewährleistet und zu einer Ausgangsposition zurückkehrt,
- eine abnehmbare Kappe (8), die lösbar an einer oberen Oberfläche (7) des Körpers der Taste (4) angebracht ist, wobei auf einer oberen Oberfläche der abnehmbaren Kappe, die eine Kontaktarbeitsfläche der Taste bildet, sich eine Aufschrift (13) befindet, die eine Funktion der Taste anzeigt,
**wobei** die abnehmbare Kappe (8) einen Kopf (10) und mindestens ein Verbindungselement (11) aufweist, das von der unteren Seite der abnehmbaren Kappe (8) ragt, und zur Befestigung der abnehmbaren Kappe (8) an dem Körper der Taste (4) das mindestens eine Verbindungselement (11) in einer nach Form und Position entsprechenden im Körper der Taste (4) vorgesehenen Verbindungsöffnung (9) eingesetzt ist, und wobei der Körper der Taste (4)) und das Federelement (3) einstückig aus demselben elastischen Material ausgebildet sind.

2. Taste für eine Tastatur nach Anspruch 1, **dadurch gekennzeichnet, dass** die abnehmbare Kappe (8) aus einem elastischen Material oder aus einem harten Material hergestellt ist.

3. Taste für eine Tastatur nach einem der vorhergehenden Ansprüche, **dadurch gekennzeichnet, dass** die abnehmbare Kappe (8) eine gerade Anzahl von Verbindungselementen (11) aufweist, die bezüglich mindestens einer Symmetrieebene der abnehmbaren Kappe symmetrisch angeordnet sind, wobei die Verbindungselemente (11) in ihre nach Form und Position entsprechenden im Körper der Taste (4) vorgesehenen Verbindungsöffnungen (9) eingesetzt sind.

4. Taste für eine Tastatur nach Anspruch 3, **dadurch gekennzeichnet, dass** die abnehmbare Kappe (8) zwischen mindestens einem Paar von symmetrisch angeordneten Verbindungselementen eine vertikale Verstärkungsrippe (14) aufweist und der Körper der Taste (4) mit nach Form und Position korrespondierender Nut (15) zur Aufnahme der Verstärkungsrippe (14) versehen ist.

5. Taste für eine Tastatur nach einem der vorhergehenden Ansprüche, **dadurch gekennzeichnet, dass** mindestens eine der Öffnungen (9) im Körper der Taste (4) eine Durchgangsbohrung ist, die von der oberen Oberfläche zur unteren Oberfläche des Körpers der Taste (4) hin verläuft und sein entsprechendes längliches Verbindungselement (11.2) an seinem unteren Ende mindestens ein Eingriffselement (12) zum Eingriff mit einem jeweiligen im Körper der Taste (4) vorgesehenen Stützelement (19) aufweist, das am unteren Ende der entsprechenden Durchgangsöffnung (9) vorgesehen ist.

6. Taste für eine Tastatur nach Anspruch 5, **dadurch gekennzeichnet, dass** eine Länge Le des länglichen Verbindungselements (11) der abnehmbaren Kappe größer ist als eine Länge Lo der Durchgangsöffnung (9), so dass das untere Ende des Verbindungselements (11) von der Unterseite des Körpers der Taste (4) hervorragt.

7. Taste für eine Tastatur nach einem der vorhergehenden Ansprüche, **dadurch gekennzeichnet, dass** auf der oberen Oberfläche des Körpers der Taste (4) eine Aufnahme (16) vorgesehen ist, die den Kopf der Kappe (10) ergreift, welche mit seitlichen Abmessungen und Form entsprechend der Aufnahme (16) ausgebildet ist.

8. Taste für eine Tastatur nach einem der Ansprüche 1 bis 6, **dadurch gekennzeichnet, dass** die abnehmbare Kappe (8) eine Umfangskante (17) aufweist, die von der unteren Oberfläche des Kopfes der Kappe (10) nach unten ragt und der obere Teil des Körpers der Taste (4) ist mit einer abgestuften Umfangsausnehmung (18) mit entsprechender Form und Größe versehen, um die Umfangskante (17) der abnehmbaren Kappe (8) aufzunehmen.

9. Unterlage für Tasten, die Tasten nach einem der Ansprüche 1 bis 8 umfasst, die an einem flachen Hauptelement (2) befestigt sind, wobei die Tasten an dem flachen Hauptelement (2) in einer vorbestimmten Reihenfolge angeordnet sind und mit diesem mittels elastischer Federelemente (3) verbunden sind.

10. Unterlage für Tasten nach Anspruch 9, **dadurch gekennzeichnet, dass** das flache Hauptelement (2), die Körper der Tasten (4) und die elastischen Federelemente (3) einstückig aus demselben elastischen Material hergestellt sind.

11. Tastatur für ein elektronisches Gerät, umfassend die Unterlage für Tasten (1) nach Anspruch 9 oder 10.

## Revendications

1. Un bouton de clavier, comprenant:
- un corps de bouton (4),
- un élément de contact (5) avec une couche de contact (6), ledit élément de contact (5) étant positionné à une face inférieure du corps de bouton (4),
- un élément à ressort (3) issu d'un matériau élastique fournissant une course nécessaire de travail du bouton et son retour en position de départ,
- un capuchon détachable (8) qui est fixé amovible à une face supérieure (7) du corps de bouton (4), dans lequel une inscription (13) indiquant une fonction du bouton est ménagée à une face supérieure du capuchon détachable (8) qui forme une surface de travail par contact du bouton,
**dans lequel** le capuchon détachable (8) comporte une tête (10) et au moins un élément d'assemblage (11) en saillie du côté inférieur du capuchon détachable (8) pour la fixation dudit capuchon détachable (8) audit corps de bouton (4), ledit au moins un élément d'assemblage (11) étant inséré dans au moins une ouverture d'assemblage (9) de forme et de position complémentaires qui est ménagée dans le corps de bouton (4), et dans lequel le corps de bouton (4) et l'élément à ressort (3) sont formés d'une seule pièce issue du même matériau élastique.

2. Bouton de clavier selon la revendication 1, **caractérisé en ce que** le capuchon détachable (8) est issu d'un matériau élastique ou d'un matériau rigide.

3. Bouton de clavier selon l'une quelconque des revendications précédentes, **caractérisé en ce que** le capuchon détachable (8) comporte un nombre pair d'éléments d'assemblage (11) qui sont disposés symétriquement conformément à au moins un plan de symétrie du capuchon détachable (8), lesdits éléments d'assemblage (11) étant insérés dans le corps de bouton (4) à l'intérieur de leurs ouvertures d'assemblage (9) de forme et de position complémentaires respectives.

4. Bouton de clavier selon la revendication 3, **caractérisé en ce que** le capuchon détachable (8) comporte une nervure verticale de renfort (14) entre au moins une paire d'éléments d'assemblage (11) disposés symétriquement, et **en ce que** le corps de bouton (4) est pourvu d'une gorge (15) de réception de ladite nervure de renfort (14) de forme et de position correspondantes (14).

5. Bouton de clavier selon l'une quelconque des revendications précédentes, **caractérisé en ce qu'**au moins l'une des ouvertures (9) dans le corps de bouton (4) est un trou traversant s'étendant depuis une face de sommet vers une face de dessous du corps de bouton (4), et **en ce que** son élément d'assemblage (11.2) allongé correspondant comporte à son extrémité inférieure au moins un élément d'engagement (12) pour la réception d'un élément de support (19) respectif ménagé dans le corps de bouton (4) à l'extrémité inférieure de l'ouverture traversante (9) correspondante.

6. Bouton de clavier selon la revendication 5, **caractérisé en ce qu'**une longueur Lₑ dudit élément d'assemblage (11) allongé du capuchon détachable (8) est supérieure à une longueur Lₒ de ladite ouverture traversante (9), de sorte que l'extrémité inférieure de l'élément d'assemblage (11) émerge du côté inférieur du corps de bouton (4).

7. Bouton de clavier selon l'une quelconque des revendications précédentes, **caractérisé en ce qu'**à la face supérieure du corps de bouton (4) est ménagé un berceau (16) de saisie de la tête (10) du capuchon qui est agencée selon des dimensions latérales et une forme correspondantes audit berceau (16).

8. Bouton de clavier selon l'une quelconque des revendications 1 à 6, **caractérisé en ce que** le capuchon détachable (8) présente un bord périphérique (17) s'étendant en saillie périphérique vers le bas de la face inférieure de la tête (10) du capuchon, et **en ce que** dans la partie supérieure du corps de bouton (4) est ménagé un dégagement périphérique étagé (18) avec une forme et une dimension correspondantes pour la réception dudit bord périphérique (17) du capuchon détachable (8).

9. Support pour des boutons comprenant des boutons selon l'une quelconque des revendications 1 à 8 fixés à un élément plat principal (2), dans lequel lesdits boutons sont disposés sur l'élément plat principal (2) selon un ordre prédéterminé et sont reliés à celui-ci au moyen des éléments élastiques à ressort (3).

10. Support pour des boutons selon la revendication 9, **caractérisé en ce que** l'élément plat principal (2), les corps de bouton (4) et les éléments de ressort élastiques (3) sont issus du même matériau élastique en formant un corps monolithique.

11. Clavier pour un dispositif électronique comprenant un support de boutons selon les revendications 9 ou 10.
